# EUROPEAN PATENT APPLICATION

(11) **EP 4 492 135 A1**
(43) Date of publication of application: **15.01.2025**
(21) Application number: 23790858.7
(22) Date of filing: 15.02.2023
(51) Int. Cl.: G03B 21/14, G03B 21/20, G02B 27/01, B60R 11/02

(54) **PROJECTION APPARATUS AND VEHICLE**

(30) Priority: 21.04.2022 CN 202210423594
(71) Applicant: Shenzhen Yinwang Intelligent Technologies Co., Ltd., Shenzhen City, Guangdong 518129 (CN)
(72) Inventor: ZHAO, Qing, Shenzhen, Guangdong 518129 (CN); FANG, Zhifang, Shenzhen, Guangdong 518129 (CN); CHANG, Zhiwen, Shenzhen, Guangdong 518129 (CN)
(74) Representative: Gill Jennings & Every LLP
(86) International application number: PCT/CN2023/076118
(87) International publication number: WO 2023/202195

(57) **Abstract**

A projection apparatus (100) and a transportation means including the projection apparatus (100) are provided. The projection apparatus (100) includes a first image source (11), a second image source (12), a first wavelength reflection unit (21), a second wavelength reflection unit (22), and a system reflection unit (3). The first image source (11) is configured to generate a first light beam (P1). The second image source (12) is configured to generate a second light beam (P2). A spectrum of the first light beam (P1) is different from a spectrum of the second light beam (P2). The first wavelength reflection unit (21) is configured to: reflect the first light beam (P1) to the system reflection unit (3), and transmit, to the second wavelength reflection unit (22), light that is in the second light beam (P2) and that has a different wavelength from that in the first light beam (P1). The second wavelength reflection unit (22) is configured to reflect, to the system reflection unit (3), the light that is in the second light beam (P2) and that has the different wavelength from that in the first light beam (P1). The system reflection unit (3) is configured to: reflect the received first light beam (P1), and reflect the light that is in the second light beam (P2) and that has the different wavelength from that in the first light beam (P1). The projection apparatus (100) implements multi-focal plane display through a simple structure and a miniaturization design.

## Description

This application claims priority to Chinese Patent Application No. 202210423594.1, filed with the China National Intellectual Property Administration on April 21, 2022 and entitled "PROJECTION APPARATUS AND TRANSPORTATION MEANS", which is incorporated herein by reference in its entirety.

### TECHNICAL FIELD

This application relates to the field of projection technologies, and in particular, to a projection apparatus that can be used in a head-up display, and a transportation means including the projection apparatus.

### BACKGROUND

A head-up display (Head-Up Display, HUD) is a head-up display apparatus, and starts to be used in a vehicle, and is configured to project dashboard or other driving and road condition information onto a front windshield. In this way, during driving, a driver can know the dashboard information of the vehicle without moving a line of sight to a dashboard.

If all the information is projected onto a virtual image plane, the information seems messy, which is likely to block a normal field of view. Therefore, a dual-focal plane solution emerges. For example, information such as speed, temperature, and pressure on the dashboard may be projected onto a near-field focal plane that is close to the driver, and a driving direction and alarm information may be projected onto a far-field focal plane that is far away from the driver. In this way, the driver can focus on a distant road, and can obtain related information without carefully viewing the information on the near-field focal plane.

Therefore, how to design a projection apparatus that can implement multi-focal plane display and has a small volume is an urgent technical problem to be resolved currently.

### SUMMARY

This application provides a projection apparatus and a transportation means including the projection apparatus. A main objective is to provide a projection apparatus that can implement multi-screen display and has a small volume.

To achieve the foregoing objective, the following technical solutions are used in this application.

According to a first aspect, this application provides a projection apparatus. The projection apparatus may be used in a head-up display.

The projection apparatus includes: a first image source, a second image source, a first wavelength reflection unit, a second wavelength reflection unit, and a system reflection unit. The first image source is configured to generate a first light beam that carries first image content. The second image source is configured to generate a second light beam that carries second image content. A spectrum of the first light beam is different from a spectrum of the second light beam. The first wavelength reflection unit is located on a propagation path of the first light beam and a propagation path of the second light beam. The second wavelength reflection unit is located on the propagation path of the second light beam. The first wavelength reflection unit is configured to: reflect the first light beam to the system reflection unit, and transmit, to the second wavelength reflection unit, light that is in the second light beam and that has a different wavelength from that in the first light beam. The second wavelength reflection unit is configured to reflect, to the system reflection unit, the light that is in the second light beam and that has the different wavelength from that in the first light beam. The system reflection unit is configured to: reflect the received first light beam, and reflect the light that is in the second light beam and that has the different wavelength from that in the first light beam.

In the projection apparatus provided in this application, the first image source and the second image source are used. The spectrum of the first light beam generated by the first image source is different from the spectrum of the second light beam generated by the second image source. In other words, there is no intersection between a wavelength range of the spectrum of the first light beam and a wavelength range of the spectrum of the second light beam, or a wavelength range of the spectrum of the second light beam partially overlaps a wavelength range of the spectrum of the first light beam. In this way, when the first light beam and the second light beam are projected to the first wavelength reflection unit, the first wavelength reflection unit not only can reflect the first light beam, but also can transmit the light that is in the second light beam and that has the different wavelength from that in the first light beam, to perform beam splitting processing on the first light beam and the second light beam, so as to generate an optical path difference. In addition, the first wavelength reflection unit may reflect the first light beam, and the light that is in the second light beam and that has the different wavelength from that in the first light beam is transmitted through the first wavelength reflection unit, and then is reflected by the second wavelength reflection unit. In this way, dual-focal plane projection can be implemented.

In other words, the projection apparatus provided in this application implements multi-screen display based on a technology in which the first wavelength reflection unit performs beam splitting on the spectrum of the first image source and the spectrum of the second image source.

In addition, the first wavelength reflection unit in this application can reflect the first light beam, and can further transmit, to the second wavelength reflection unit, the light that is in the second light beam and that has the different wavelength from that in the first light beam. In other words, in an implementable structure, the first wavelength reflection unit and the second wavelength reflection unit have an overlapping part, and a spatial optical path is compact, so that the volume of the projection apparatus is small.

In a possible implementation, the second wavelength reflection unit and the first wavelength reflection unit are stacked along the propagation path of the second light beam. Reflected light of the second wavelength reflection unit is transmitted through the first wavelength reflection unit, and then is incident on the system reflection unit.

It may be understood that a light beam reflected by the second wavelength reflection unit is incident on the first wavelength reflection unit, and then is transmitted to the system reflection unit through the first wavelength transmitting unit. From a perspective of a craft structure, in this way, a spacing between the first wavelength reflection unit and the second wavelength reflection unit that are stacked can be reduced, so that the volume of the projection apparatus is further reduced.

In a possible implementation, the first wavelength reflection unit is further configured to reflect light that is in the second light beam and that has a same wavelength as that in the first light beam. The light that is reflected by the first wavelength reflection unit in the second light beam and that has a same wavelength as that in the first light beam is not incident on the system reflection unit.

The light that is obtained by the first wavelength reflection unit by performing beam splitting in the second light beam and that has a same wavelength as that in the first light beam is used as stray light. In this application, the stray light is not incident on the system reflection unit. In this way, the stray light can be prevented from affecting imaging quality, so that display quality of the projection apparatus is improved.

In a possible implementation, the first wavelength reflection unit has a first surface and a second surface that are opposite to each other. The first surface is configured to: reflect the first light beam to the system reflection unit, and transmit, to the second wavelength reflection unit, the light that is in the second light beam and that has the different wavelength from that in the first light beam. A partial area of the second surface is configured to reflect the reflected light of the second wavelength reflection unit.

In this embodiment, the first wavelength reflection unit not only has a spectrum beam splitting function, but also reflects the light beam reflected by the second wavelength reflection unit again, for example, reflects the light beam at least once. In this way, in a case in which an optical path is constant, a distance between the two wavelength reflection units can be shortened, and the size of the projection apparatus is further reduced.

In a possible implementation, the first light beam and the second light beam may be monochromatic light, or may be polychromatic light.

In a possible implementation, the first wavelength reflection unit and the second wavelength reflection unit may be planar reflective mirrors, or may be curved-surface reflective mirrors.

In a possible implementation, the curved-surface reflective mirror may be a concave reflective mirror, or may be a convex reflective mirror.

In a possible implementation, a first reflection film layer is formed on a reflection surface of the first wavelength reflection unit. The first reflection film layer is configured to: totally reflect the first light beam, and transmit the light that is in the second light beam and that has the different wavelength from that in the first light beam.

The reflection film layer is formed on the reflection surface of the first wavelength reflection unit, to totally reflect the first light beam. In this way, imaging quality of the first image content generated by the first image source can be improved. In terms of a structure, compared with another beam splitting structure such as a grating, this beam splitting structure has a simple structure, is easy to be implemented, and has a small volume.

In a possible implementation, a second reflection film layer is formed on a reflection surface of the second wavelength reflection unit. The second reflection film layer is configured to totally reflect the light that is in the second light beam and that has the different wavelength from that in the first light beam.

Similar to the disposing of the first reflection film layer, the reflection film layer is formed on the reflection surface of the second wavelength reflection unit, to totally reflect the light that is in the second light beam and that has the different wavelength from that in the first light beam. In this way, imaging quality of the second image content generated by the second image source can be improved. In terms of a structure, compared with another beam splitting structure such as a grating, this beam splitting structure has a simple structure, is easy to be implemented, and has a small volume.

In a possible implementation, there is no intersection between the wavelength range of the spectrum of the first light beam and the wavelength range of the spectrum of the second light beam. The wavelength range of the spectrum of the first light beam may be referred to as the wavelength range of the first light beam, and the wavelength range of the spectrum of the second light beam may be referred to as the wavelength range of the second light beam.

This is one solution in which the spectrum of the first light beam is different from the spectrum of the second light beam.

In a possible implementation, the first wavelength reflection unit includes a beam splitter. A first reflection film layer is formed on a reflection surface of the beam splitter. The first reflection film layer is configured to: totally reflect the first light beam, and transmit the second light beam.

The first wavelength reflection unit herein uses the beam splitter having the first reflection film layer, and thus has a simple structure.

In addition, because there is no intersection between the wavelength range of the first light beam and the wavelength range of the second light beam, the first reflection film layer can totally reflect the first light beam, and the first reflection film layer can transmit the second light beam.

In a possible implementation, the second wavelength reflection unit includes a reflective mirror. The reflective mirror and the beam splitter are stacked along the propagation path of the second light beam. A second reflection film layer is formed on a reflection surface of the reflective mirror. The second reflection film layer is configured to totally reflect the second light beam.

In this implementable structure, the reflective mirror having the second reflection film layer is used as the second wavelength reflection unit, and the structure is also simple.

In a possible implementation, the first image source includes an LD light source or an LED light source, and the second image source includes an LD light source or an LED light source.

In a possible implementation, a wavelength range of the second light beam partially overlaps a wavelength range of the first light beam.

That is another solution in which the spectrum of the first light beam is different from the spectrum of the second light beam.

In a possible implementation, the first wavelength reflection unit includes a beam splitter. A third reflection film layer is formed on a reflection surface of the beam splitter. The third reflection film layer is configured to: totally reflect the first light beam, and totally reflect light that is in the second light beam and that has a same wavelength as that of the first light beam. The third reflection film layer is further configured to transmit the light that is in the second light beam and that has the different wavelength from that in the first light beam.

In this embodiment, because the wavelength range of the second light beam partially overlaps the wavelength range of the first light beam, the third reflection film not only can totally reflect the first light beam, but also can transmit the light that is in the second light beam and that has the different wavelength from that in the first light beam, to implement beam splitting.

In a possible implementation, the second wavelength reflection unit includes a reflective mirror. The reflective mirror and the beam splitter are stacked along the propagation path of the second light beam. A fourth reflection film layer is formed on a reflection surface of the reflective mirror. The fourth reflection film layer is configured to totally reflect the light that is in the second light beam and that has the different wavelength from that in the first light beam.

In a possible implementation, the projection apparatus further includes a diffuser located on a light emergence side of the first image source and a light emergence side of the second image source. The diffuser is configured to: diffuse the first light beam to the first wavelength reflection unit, and diffuse the second light beam to the first wavelength reflection unit and the second wavelength reflection unit.

In other words, the diffuser may be disposed to increase an emission angle of any light beam.

In a possible implementation, the first image source and the second image source may be integrated into one module. For example, the module may be a digital micro reflective mirror element, laser scanning, or a PGU.

In a possible implementation, the projection apparatus further includes a polarization converter located on the light emergence side of the first image source or the light emergence side of the second image source. The polarization converter is configured to change a polarization direction of the first light beam or a polarization direction of the second light beam.

After the polarization converter changes the polarization direction of the first light beam and/or the polarization direction of the second light beam, a polarized first light beam and/or a polarized second light beam may meet a subsequent optical path processing requirement. For example, in the head-up display, when being incident on a windshield, the polarized S light has a higher reflectivity and higher imaging brightness compared with natural light.

In a possible implementation, the first image source and/or the second image source include/includes a light source, an imaging module, and a projection lens. Output light of the light source may be incident on the imaging module. The imaging module generates, based on the light input by the light source, imaging light that carries image content. The projection lens is configured to project the imaging light of the imaging module outwards.

According to a second aspect, this application further provides a transportation means. The transportation means includes a windshield and the projection apparatus according to any one of the foregoing implementations. The projection apparatus is configured to output a light beam to the windshield, to form images corresponding to different image content.

Because the transportation means provided in this application includes the projection apparatus according to the foregoing implementations, the spectrum of the first light beam and the spectrum of the second light beam are different. In addition, the first wavelength reflection unit performs beam splitting processing on the spectra, to implement an optical path difference between the two light beams, so as to implement dual-focal plane projection.

### BRIEF DESCRIPTION OF DRAWINGS

FIG. 1 is a diagram of a spectrum of an LED light source according to this application;
FIG. 2 is a diagram of a structure of a projection apparatus according to an embodiment of this application;
FIG. 3a is a diagram of a spectrum of an LD light source used in a projection apparatus according to an embodiment of this application;
FIG. 3b is a diagram of a spectrum of an LED light source used in a projection apparatus according to an embodiment of this application;
FIG. 4 is a diagram of a structure of another projection apparatus according to an embodiment of this application;
FIG. 5 is a diagram of a structure of still another projection apparatus according to an embodiment of this application;
FIG. 6 is a diagram of a structure of yet another projection apparatus according to an embodiment of this application;
FIG. 7 is a diagram of a structure of still yet another projection apparatus according to an embodiment of this application;
FIG. 8 is a diagram of a structure of a first wavelength reflection unit and a second wavelength reflection unit in a projection apparatus according to an embodiment of this application;
FIG. 9 is a diagram of a structure of a further projection apparatus according to an embodiment of this application;
FIG. 10 is a diagram of a structure of a still further projection apparatus according to an embodiment of this application;
FIG. 11 is a diagram of a structure of a yet further projection apparatus according to an embodiment of this application;
FIG. 12 is a diagram of a spectrum of a related optical component used in the projection apparatus in FIG. 11;
FIG. 13 is a diagram of a structure of a still yet further projection apparatus according to an embodiment of this application;
FIG. 14 is a diagram of a spectrum of a related optical component used in the projection apparatus in FIG. 13;
FIG. 15 is a diagram of a structure of an image source in a projection apparatus according to an embodiment of this application;
FIG. 16 is a diagram of a structure of a projection apparatus that is used in a head-up display according to an embodiment of this application; and
FIG. 17 is a diagram of a functional framework of a transportation means according to an embodiment of this application.

### Reference numerals:

100: projection apparatus;
1: display;
101: first light outlet;
102: second light outlet;
11: first image source;
12: second image source;
13: third image source;
21: first wavelength reflection unit;
21a: first reflection film layer;
22: second wavelength reflection unit;
22a: first reflection film layer;
23: third wavelength reflection unit;
3: system reflection unit;
4: diffuser;
5: windshield;
6 and 7: polarization converters;
111: light source;
112: imaging module;
113: projection lens.

### DESCRIPTION OF EMBODIMENTS

Before embodiments of this application are described, some technical terms related to embodiments of this application are first described.

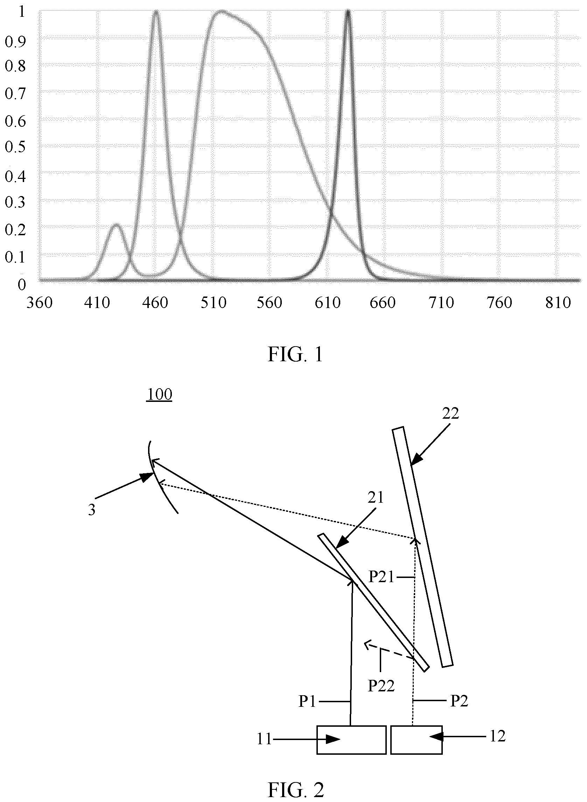

Spectrum (Spectrum): a pattern in which monochromatic light on which optical dispersion is performed is arranged in sequence by wavelength (or frequency) after beam splitting is performed on polychromatic light by a dispersion system (for example, a prism or a grating). For example, FIG. 1 shows a spectrum of a light-emitting diode (light-emitting diode, LED) light source. It can be learned from FIG. 1 that a wavelength range covered by the spectrum of the light source is 360 nm to 710 nm.

Wavelength range: For example, when a wavelength range of a light beam is 360 nm to 710 nm, it indicates that a value of a wavelength of the light beam ranges from 360 nm to 710 nm, and a wavelength of 360 nm and a wavelength of 710 nm are included.

Partial overlapping of wavelength ranges: For example, when a wavelength range of a first light beam is 360 nm to 710 nm, and a wavelength range of a second light beam is also 200 nm to 500 nm, the wavelength ranges of the two light beams partially overlap each other. For another example, when a wavelength range of a first light beam is 360 nm to 710 nm, and a wavelength range of a second light beam is also 500 nm to 700 nm, the wavelength ranges of the two light beams partially overlap each other. For another example, when a wavelength range of a first light beam is 360 nm to 710 nm, and a wavelength range of a second light beam is 200 nm to 360 nm, the wavelength ranges of the two light beams partially overlap each other. For another example, when a wavelength range of a first light beam is 360 nm to 710 nm, and a wavelength range of a second light beam is 710 nm to 900 nm, the wavelength ranges of the two light beams also partially overlap each other. However, when a wavelength range of a first light beam is 360 nm to 710 nm, and a wavelength range of a second light beam is also 360 nm to 710 nm, the wavelength ranges of the two light beams completely overlap each other.

No intersection between wavelength ranges: For example, when a wavelength range of a first light beam is 360 nm to 710 nm, and a wavelength range of a second light beam is 750 nm to 900 nm, there is no intersection between the wavelength ranges of the two light beams.

Different spectra and same spectrum: For example, there are a first image source and a second image source. A spectrum of light output by the first image source may be referred to as a first spectrum, and a spectrum of light output by the second image source may be referred to as a second spectrum. When a wavelength range covered by the first spectrum completely overlaps a wavelength range covered by the second spectrum, the two spectra are considered to be the same. On the contrary, when there is no intersection between a wavelength range covered by the first spectrum and a wavelength range covered by the second spectrum and a wavelength range covered by the first spectrum partially overlap a wavelength range covered by the second spectrum, it is considered that the two spectra are different.

For example, when a wavelength range covered by the first spectrum is 360 nm to 710 nm, and a wavelength range covered by the second spectrum is 360 nm to 500 nm, it is considered that the two spectra are different. Alternatively, when a wavelength range covered by the first spectrum is 360 nm to 710 nm, and a wavelength range covered by the second spectrum is 260 nm to 300 nm, it is also considered that the two spectra are different. Alternatively, when a wavelength range covered by the first spectrum is 360 nm to 710 nm, and a wavelength range covered by the second spectrum is 500 nm to 710 nm, it is also considered that the two spectra are different. However, when a wavelength range covered by the first spectrum is 360 nm to 710 nm, and a wavelength range covered by the second spectrum is also 360 nm to 710 nm, it is considered that the two spectra are the same.

In other words, as long as there is no intersection between wavelength ranges of two light beams or wavelength ranges of two light beams partially overlap each other, it is considered that the two spectra are different.

Optical path difference: Defined as a difference between optical paths of two light beams reaching a point.

Multi-focal plane display is to form a plurality of projection planes based on a plurality of different projection distances.

The following describes in detail specific embodiments in this application with reference to the accompanying drawings.

This application provides a projection apparatus. The projection apparatus may be used in a multimedia entertainment scenario and an assisted driving scenario. For example, the projection apparatus may be used independently, or may be integrated into another device as a component. For example, the projection apparatus may be integrated into a transportation means, or may be integrated into a head-mounted display (head-mounted display, HMD), or may be integrated into an optical desktop display device. The projection apparatus may also be referred to as a display apparatus.

For example, when the projection apparatus is used in a head-up display HUD of a transportation means, multi-screen display, referred to as multi-focal plane display, is required to display different information on different imaging planes. In this way, a driver can focus on driving, and the information does not seem messy.

In addition, the projection apparatus is further required to have a small volume to meet a miniaturization design requirement.

To meet the foregoing objectives, this application provides a projection apparatus that can implement multi-screen display and has a small volume. For an implementable structure of the projection apparatus and a projection method, refer to the following descriptions.

FIG. 2 is a diagram of a structure of a projection apparatus according to an embodiment of this application. The projection apparatus 100 includes a first image source 11, a second image source 12, a first wavelength reflection unit 21, a second wavelength reflection unit 22, and a system reflection unit 3.

Still as shown in FIG. 2, the first image source 11 is configured to generate a first light beam P1 that carries first image content, and the second image source 12 is configured to generate a second light beam P2 that carries second image content. For example, the first image content herein may include information such as speed, temperature, and pressure on a dashboard of a transportation means, and the second image content may include information such as a driving direction of the transportation means.

In addition, a spectrum of the first light beam P1 is different from a spectrum of the second light beam P2, and the term "different spectra" is explained above.

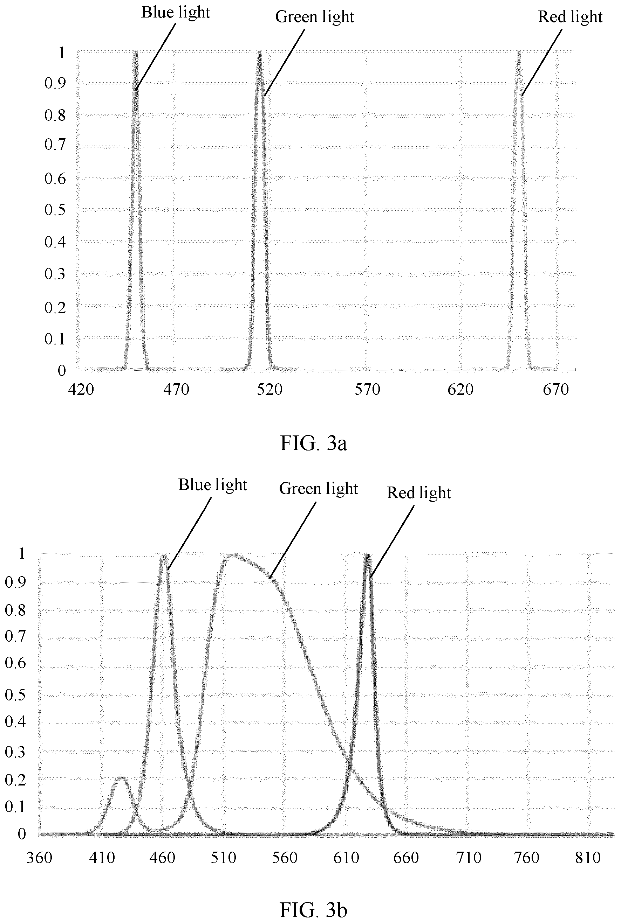

In addition, the term "different spectra" may alternatively be described again with reference to spectrum diagrams in FIG. 3a and FIG. 3b. FIG. 3a shows a spectrum obtained when the first image source 11 uses a laser diode (Laser Diode, LD) light source, and FIG. 3b shows a spectrum obtained when the second image source 12 uses a light-emitting diode (light-emitting diode, LED) light source. It can be learned from FIG. 3a and FIG. 3b that, both the first light beam P1 and the second light beam P2 are polychromatic light. A wavelength of blue light in the first light beam P1 is approximately 460 nm, a wavelength of green light in the first light beam P1 is approximately 510 nm, and a wavelength of red light in the first light beam P1 is approximately 650 nm. In the second light beam P2, a wavelength of blue light is approximately 450 nm to 500 nm, a wavelength of red light is approximately 610 nm to 650 nm, and a wavelength of green light is approximately 500 nm to 620 nm. It can be learned that a wavelength range of the second light beam P2 includes a wavelength range of the first light beam P1. In other words, the spectrum of the first light beam P1 is different from the spectrum of the second light beam P1. A spectral width of the second light beam P2 is wider compared with a spectral width of the first light beam P1, and the spectral width of the first light beam P1 is narrower.

As shown in FIG. 2, the first wavelength reflection unit 21 is located on a propagation path of the first light beam P1 and a propagation path of the second light beam P2. In other words, both the first light beam P1 and the second light beam P2 may be projected onto the first wavelength reflection unit 21. In addition, the first wavelength reflection unit 21 is configured to reflect the first light beam P1 to the system reflection unit 3. In addition, the first wavelength reflection unit 21 is further configured to transmit, to the second wavelength reflection unit 22, light that is in the second light beam P2 and that has a different wavelength from that in the first light beam P1.

For example, as shown in FIG. 2, the first wavelength reflection unit 21 may not only reflect the first light beam P1, but also perform beam splitting processing on the second light beam P2. In other words, the first wavelength reflection unit 21 may transmit a light beam P21 that is in the second light beam P2 and that has a different wavelength from that in the first light beam P1, and reflect a light beam P22 that is in the second light beam P2 and that has a same wavelength as that in the first light beam P1. In this way, an optical path difference is generated between the first light beam P1 and the light beam P21 obtained through beam splitting, so that dual-screen (dual-focal plane) projection can be implemented.

For example, when the wavelength range of the first light beam P1 is 300 nm to 500 nm, and the wavelength range of the second light beam P2 is 300 nm to 700 nm, the first wavelength reflection unit 21 may reflect the light beam P1 whose wavelength range is 300 nm to 500 nm, reflect the light beam P22 whose wavelength range is 300 nm to 500 nm in the second light beam P2, and transmit the light beam P21 whose wavelength range is 500 nm to 700 nm in the second light beam P2, to implement beam splitting processing.

Still as shown in FIG. 2, the second wavelength reflection unit 22 is configured to reflect, to the system reflection unit 3, the light that is in the second light beam P2 and that has the different wavelength from that in the first light beam P1. It may alternatively be understood as that the second wavelength reflection unit 22 is located on the propagation path of the light beam P21, and may reflect the light beam P21 to the system reflection unit 3.

As shown in FIG. 2, the system reflection unit 3 is configured to: reflect the received first light beam P1, and reflect the light beam P21 that is in the second light beam P2 and that has the different wavelength from that in the first light beam P1.

In addition, the first wavelength reflection unit 21 may transmit the light beam that is in the second light beam P2 and that has the different wavelength from that in the first light beam P1. In an implementable structure, when the first wavelength reflection unit 21 and the second wavelength reflection unit 22 are deployed, the first wavelength reflection unit 21 and the second wavelength reflection unit 22 have an overlapping part, so that a size of space occupied by the first wavelength reflection unit 21 and the second wavelength reflection unit 22 can be reduced, and a volume of the entire projection apparatus 100 is small.

Based on the foregoing descriptions of the projection apparatus 100 in this application with reference to the structure shown in FIG. 2, it can be learned that the projection apparatus 100 implements multi-screen display using a spectrum beam splitting technology, and the volume of the entire projection apparatus can be reduced to meet a miniaturization design.

Still as shown in FIG. 2, because the first wavelength reflection unit 21 can reflect the light beam P22 that is in the second light beam P2 and that has the same wavelength as that in the first light beam P1, the light beam P22 used as stray light may not be reflected to the system reflection unit 3, to prevent the light beam P22 from affecting imaging quality. In other words, the light beam P22 is reflected to an outside of the system reflection unit 3.

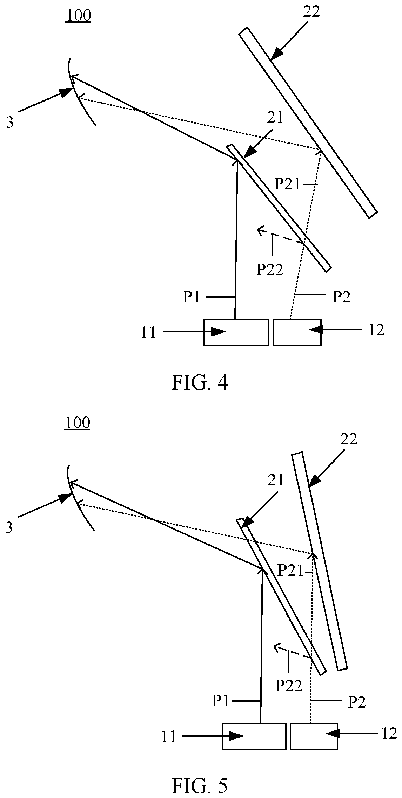

FIG. 4 is a diagram of a structure of another projection apparatus 100 according to an embodiment of this application. A difference between the projection apparatus 100 shown in FIG. 4 and the projection apparatus 100 shown in FIG. 2 lies in that, in FIG. 2, the first light beam P1 and the second light beam P2 are parallel, and the first wavelength reflection unit 21 and the second wavelength reflection unit 22 are not disposed in parallel; but in FIG. 4, a first wavelength reflection unit 21 and a second wavelength reflection unit 22 are disposed in parallel, and a first light beam P1 and a second light beam P2 are not parallel.

Regardless of whether the embodiment shown in FIG. 2 or the embodiment shown in FIG. 4 is used, the first wavelength reflection unit 21 can implement a spectrum beam splitting function, and finally implement dual-focal plane projection. In addition, in both different embodiments, the light beam P22 can be reflected to the outside of the system reflection unit 3, to avoid stray light.

FIG. 5 is a diagram of a structure of still another projection apparatus 100 according to an embodiment of this application. A difference from the projection apparatus 100 shown in FIG. 2 lies in that reflected light of a second wavelength reflection unit 22 is transmitted through a first wavelength reflection unit 21, and is then incident on a system reflection unit 3. In other words, after being reflected by the second wavelength reflection unit 22, a light beam P21 shown in FIG. 5 is incident on the first wavelength reflection unit 21, and then is incident on the system reflection unit 3 after being transmitted through the first wavelength reflection unit 21. In this design, a distance between the first wavelength reflection unit 21 and the second wavelength reflection unit 22 can be reduced, to further reduce a volume of the projection apparatus 100.

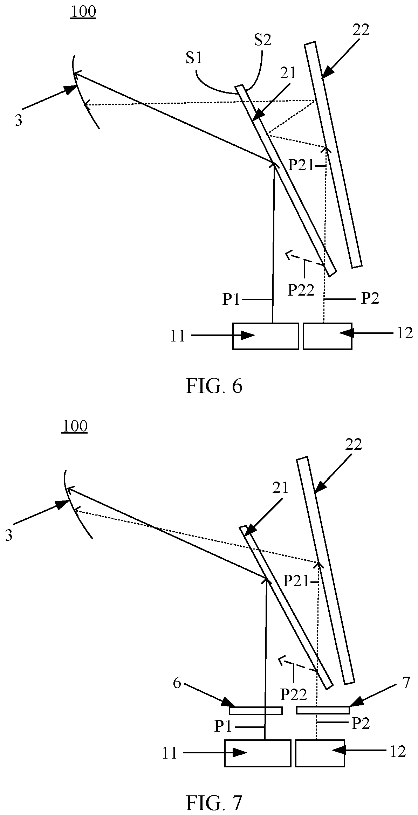

FIG. 6 is a diagram of a structure of yet another projection apparatus 100 according to an embodiment of this application. A difference from the projection apparatus 100 shown in FIG. 5 lies in that a light beam P21 that is reflected by a second wavelength reflection unit 22 in a second light beam P2 and that has a different wavelength from that in a first light beam P1, may be incident on a first wavelength reflection unit 21, and then reflected by the first wavelength reflection unit 21 to the second wavelength reflection unit 22. The first wavelength reflection unit 21 may reflect the light beam P21 at least once. For example, FIG. 6 shows an example in which the first wavelength reflection unit 21 reflects the light beam P21 once. The first wavelength reflection unit 21 may reflect the light beam P21 a plurality of times. In other words, the light beam P21 may be reflected the plurality of times between the first wavelength reflection unit 21 and the second wavelength reflection unit 22.

Still refer to the structure shown in FIG. 6. It may be understood that the first wavelength reflection unit 21 has a first surface S1 and a second surface S2 that are opposite to each other. The first surface S1 is configured to: reflect the first light beam P1 to a system reflection unit 3, and transmit, to the second wavelength reflection unit 22, the light beam P21 that is in the second light beam P2 and that has the different wavelength from that in the first light beam P1. In addition to transmitting the light beam P21 to the second wavelength reflection unit 22 by the second surface S2, a partial area of the second surface S2 is further configured to reflect the light beam P21 reflected by the second wavelength reflection unit 22. For example, the light beam P21 reflected by the second wavelength reflection unit 22 in FIG. 6 is incident on the second surface S2, reflected by the second surface S2 to the second wavelength reflection unit 22, reflected by the second wavelength reflection unit 22 and transmitted through the first wavelength reflection unit 21, and incident on the system reflection unit 3.

In the solution provided in FIG. 6, reflected light of the second wavelength reflection unit 22 is reflected by the partial area of the second surface of the first wavelength reflection unit 21, so that an optical path of the reflected light between the two wavelength reflection units becomes long, then a distance between the two wavelength reflection units can be reduced, and a size of the projection apparatus is further reduced.

FIG. 7 is a diagram of a structure of still yet another projection apparatus 100 according to an embodiment of this application. The projection apparatus 100 shown in this embodiment not only includes the first image source 11, the second image source 12, the first wavelength reflection unit 21, the second wavelength reflection unit 22, and the system reflection unit 3, but also includes a polarization converter 6 and a polarization converter 7. The polarization converter 6 is located on a light emergence side of the first image source 11, and the polarization converter 7 is located on a light emergence side of the second image source 12. The polarization converter 6 and the polarization converter 7 are respectively configured to change a polarization direction of a first light beam P1 and a polarization direction of a second light beam P2. The first light beam P1 is used as an example. For example, the first light beam P1 is natural light and is converted into linearly polarized light after passing through the polarization converter 7. Alternatively, the first light beam P1 is linearly polarized light and is converted into circularly polarized light or elliptically polarized light after passing through the polarization converter 7. Alternatively, the first light beam P1 is P-polarized light, and is converted into S-polarized light after passing through the polarization converter 7. For a polarization conversion process of the second light beam P2, refer to the foregoing polarization conversion process of the first light beam P 1.

The polarization converter 6 and the polarization converter 7 each may be a half-wave plate, a quarter-wave plate, or a polarizer. In this embodiment, only the polarization converter 6 may be added on the light emergence side of the first image source 11, or only the polarization converter 7 may be added on the light emergence side of the second image source 12, or both the polarization converter 6 and the polarization converter 7 are added. Through polarization conversion, the first light beam P1 and/or the second light beam P2 may meet a processing requirement of a subsequent optical path. For example, when being incident on a windshield, S light has a higher reflectivity and higher imaging brightness compared with natural light.

In some implementations, with reference to FIG. 2 and FIG. 4 to FIG. 7, the second wavelength reflection unit 22 and the first wavelength reflection unit 21 may be stacked along a propagation path of the second light beam P2. For example, the first wavelength reflection unit 21 and the second wavelength reflection unit 22 may be disposed in parallel, or may not be disposed in parallel.

In some other implementations, with reference to FIG. 2 and FIG. 4 to FIG. 7, the first light beam P1 generated by the first image source 11 may be parallel to or not parallel to the second light beam P2 generated by the second image source 12.

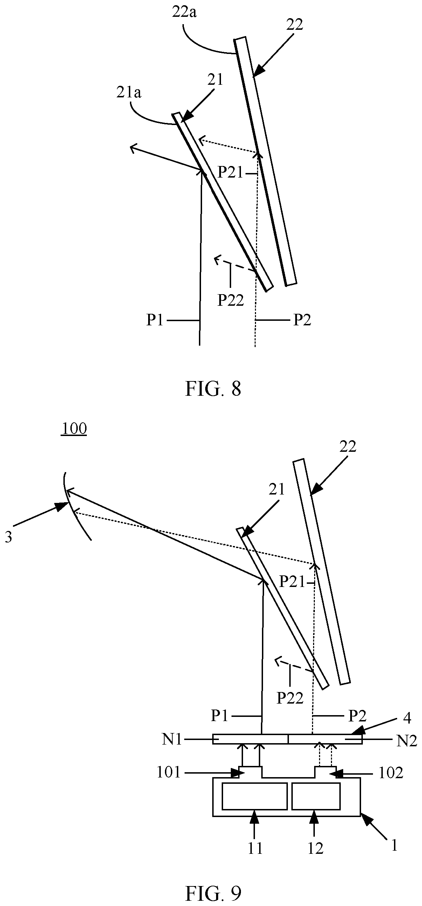

FIG. 8 is a diagram of an implementable structure of a first wavelength reflection unit 21 and a second wavelength reflection unit 22. In some implementable structures, a first reflection film layer 21a may be formed on a reflection surface of the first wavelength reflection unit 21. The first reflection film layer 21a is configured to totally reflect a first light beam P1. For example, an RGB narrow-band reflection film may be formed on the reflection surface of the first wavelength reflection unit 21. In this way, imaging quality of first image content generated by a first image source 11 can be improved. In some other implementable structures, a second reflection film layer 22a may be formed on a reflection surface of the second wavelength reflection unit 22. The second reflection film layer 22a is configured to totally reflect a light beam P21 that is in a second light beam P2 and that is transmitted to the second wavelength reflection unit 22. Similar to the first reflection film layer 21a, the second reflection film layer 22a can also improve imaging quality of second image content generated by a second image source 12.

In addition, selecting a reflection film layer to perform beam splitting is likely to implement from a process perspective, and manufacturing costs can be further reduced.

For the projection apparatus shown in the foregoing embodiments, the following separately describes a structure of each part of the projection apparatus.

In an implementable structure, the first wavelength reflection unit 21 may include a beam splitter, and a first reflection film layer 21a may be formed on a reflection surface of the beam splitter. When the beam splitter having the first reflection film layer 21a is used as the first wavelength reflection unit 21, a structure is simple, and a miniaturization design requirement of the projection apparatus 100 can be further met. Because the beam splitter having the first reflection film layer 21a implements a beam splitting function, the beam splitter may be referred to as a beam splitter, and certainly, may also be referred to as a reflective mirror.

The second wavelength reflection unit 22 may include a reflective mirror, and a second reflection film layer 22a may be formed on a reflection surface of the reflective mirror. When the reflective mirror having the second reflection film layer 22a is used as the second wavelength reflection unit 22, a structure is also simple, and the miniaturization design requirement of the projection apparatus 100 may also be further met.

When the first wavelength reflection unit 21 includes the beam splitter and the second wavelength reflection unit 22 includes the reflective mirror, the beam splitter and the reflective mirror may be stacked along the propagation path of the second light beam P2. In this way, the volume of the projection apparatus 100 is significantly reduced.

The system reflection unit 3 provided in this application may include a free-form curved-surface mirror. The first light beam reflected by the first wavelength reflection unit 21 may be incident on a reflection surface of the free-form curved-surface mirror, and the light beam P21 reflected by the second wavelength reflection unit 22 may also be incident on the reflection surface of the free-form curved-surface mirror.

For example, the first image source 11 and/or the second image source 12 may be any one of a liquid crystal on silicon (liquid crystal on silicon, LCOS) display, an organic light-emitting diode (Organic Light-Emitting Diode, OLED) display, a liquid crystal display (liquid crystal display, LCD), a digital light processing (digital light processing, DLP) display, and a micro-electro-mechanical system (micro-electro-mechanical system, MEMS) display.

In some implementable structures, in a diagram of a structure of a projection apparatus 100 shown in FIG. 9, the first image source 11 and the second image source 12 may be integrated into one display 1. The display 1 has a first light outlet 101 and a second light outlet 102. The first light outlet 101 is configured to emit the first light beam of the first image source 11, and the second light outlet 102 is configured to emit the second light beam of the second image source 12. In this case, a diffuser 4 may be disposed on a light emergence side of the display 1. A first diffusion area N1 and a second diffusion area N2 may be formed on the diffuser 4. The first diffusion area N1 is configured to: receive the first light beam emitted by the first light outlet 101, and diffuse the first light beam. The second diffusion area N2 is configured to: receive the second light beam emitted by the second light outlet 102, and diffuse the second light beam.

FIG. 2 and FIG. 4 to FIG. 9 show the projection apparatus 100 that can implement dual-screen (dual-focal plane) display. When the projection apparatus 100 needs to implement multi-screen (multi-focal plane) display, for example, triple-screen (triple-focal plane) display or quad-screen (quad-focal plane) display, the projection apparatus 100 shown in the following may be used.

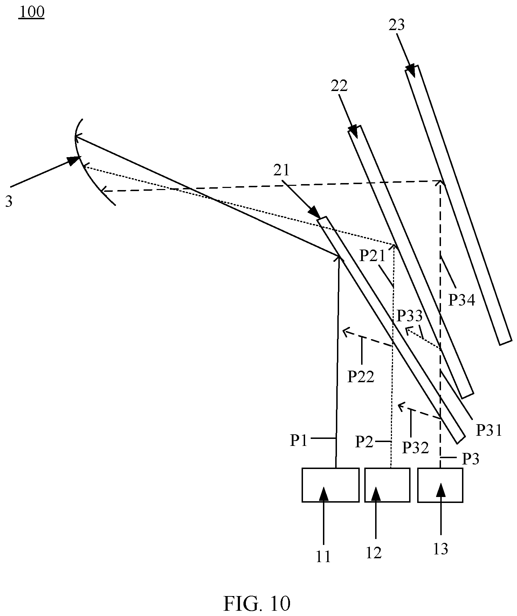

FIG. 10 is a diagram of a structure of an example of a projection apparatus 100 that can implement triple-screen display according to this application. Specifically, the projection apparatus 100 not only includes the first image source 11, the second image source 12, the first wavelength reflection unit 21, the second wavelength reflection unit 22, and the system reflection unit 3, but also includes a third image source 13 and a third wavelength reflection unit 23.

The first image source 11 is configured to generate a first light beam P1 that carries first image content, the second image source 12 is configured to generate a second light beam P2 that carries second image content, and the third image source 13 is configured to generate a third light beam P3 that carries third image content. Spectra of every two of the first light beam P1, the second light beam P2, and the third light beam P3 are different. For an explanation of different spectra, refer to the foregoing descriptions.

Still as shown in FIG. 10, the first wavelength reflection unit 21 is located on a propagation path of the first light beam P1, a propagation path of the second light beam P2, and a propagation path of the third light beam P3. The second wavelength reflection unit 22 is located on the propagation path of the second light beam P2 and the propagation path of the third light beam P3. The third wavelength reflection unit 22 is located on the propagation path of the third light beam P3.

The first wavelength reflection unit 21 is configured to reflect the first light beam P1 to the system reflection unit 3, and is further configured to transmit, to the second wavelength reflection unit 22, light that is in the second light beam P2 and that has a different wavelength from that in the first light beam P1, to implement beam splitting on the second light beam P2. In addition, the first wavelength reflection unit 21 is further configured to transmit, to the second wavelength reflection unit 22, light that is in the third light beam P3 and that has a different wavelength from that in the first light beam P1, to implement partial beam splitting on the third light beam P3.

The second wavelength reflection unit 22 is configured to reflect, to the system reflection unit 3, the light that is in the second light beam P2 and that has the different wavelength from that in the first light beam P1. In addition, the second wavelength reflection unit 22 is further configured to transmit, to the third wavelength reflection unit 23, light that is in the third wavelength P3 and has a different wavelength from that in the second wavelength P2. In other words, the second wavelength reflection unit 22 implements beam splitting again on the third light beam P3.

The third wavelength reflection unit 23 is configured to reflect, to the system reflection unit 3, the light that is in the third light beam P3 and has the different wavelength from that in the second light beam P2.

In other words, as shown in FIG. 10, the first wavelength reflection unit 21 reflects the first light beam P1, reflects a light beam P22 that is in the second light beam P2 and that has a same wavelength as that in the first light beam P1, reflects a light beam P32 that is in the third light beam P3 and that has a same wavelength as that in the first light beam P1, transmits a light beam P21 that is in the second light beam P2 and that has a different wavelength from that in the first light beam P1, and transmits a light beam P31 that is in the third light beam P3 and that has a different wavelength from that in the first light beam P1. In other words, the first wavelength reflection unit 21 implements a beam splitting function.

Still as shown in FIG. 10, the second wavelength reflection unit 22 reflects the light beam P21 that is in the second light beam P2 and that has the different wavelength from that in the first light beam P1, reflects a light beam P33 that is in the third light beam P3 and that has a same wavelength as that in the second light beam P2, and transmits a light beam P34 that is in the third light beam P3 and that has a different wavelength from that in the second light beam P2. In other words, the second wavelength reflection unit 22 also implements a beam splitting function.

Still as shown in FIG. 10, the third wavelength reflection unit 23 reflects the light beam P34 that is in the third light beam P3 and that has the different wavelength from that in the first light beam P1 and that in the second light beam P2.

Based on the structure of the projection apparatus 100 shown in FIG. 10, it may be learned that an optical path difference is generated based on the beam splitting function of the first wavelength reflection unit 21 and the beam splitting function of the second wavelength reflection unit 22, to implement triple-screen projection.

In conclusion, when the projection apparatus provided in this application includes N image sources, the N image sources generate N light beams that carry different image content, and spectra of every two of the N light beams are different, where N is greater than 1.

The projection apparatus further includes N wavelength reflection units, where a light beam transmitted to an i^{th} wavelength reflection unit is transmitted from a first wavelength reflection unit to an (i-1)^{th} wavelength reflection unit in sequence, where a value of i ranges from 2 to N.

In addition, the (i-1)^{th} wavelength reflection unit is configured to transmit light that is in an i^{th} light beam and that has a different wavelength from that in an (i-1)^{th} light beam, and the i^{th} wavelength reflection unit is configured to reflect the light that is in the i^{th} light beam and that has the different wavelength from that in the (i-1)^{th} light beam, where a value of i ranges from 2 to N. In other words, when there are N wavelength reflection units, the first wavelength reflection unit to an (N-1)^{th} wavelength reflection unit each has a beam splitting function, so that the N light beams generate an optical path difference and implement N-focal plane display.

Similar to the dual-focal plane projection apparatus and the triple-focal plane projection apparatus shown above, in the projection apparatus 100 that can implement N-focal plane display, a reflection film layer formed on a reflection surface of a wavelength reflection unit may be used to transmit and reflect a light beam.

The following specifically provides two projection apparatuses that can implement dual-screen display. In the two projection apparatuses, different light sources are used. For details, refer to the following embodiments.

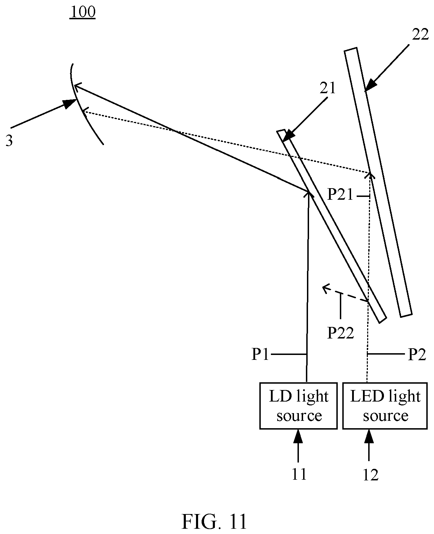

FIG. 11 is a diagram of a structure of a projection apparatus 100 that can implement dual-screen display according to this application. A first image source 11 uses an LD light source, and a second image source 12 uses an LED light source.

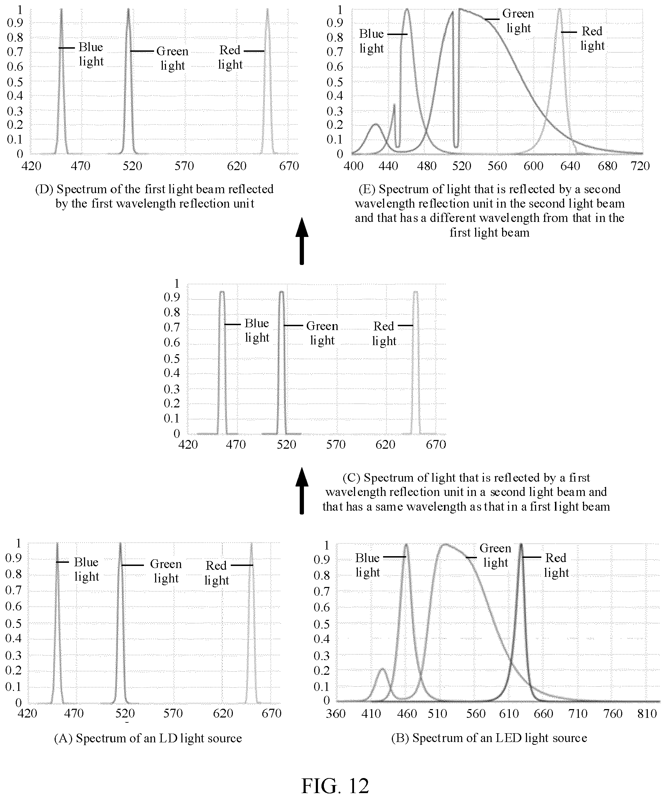

FIG. 12 shows a spectrum of the LD light source and a spectrum of the LED light source. It is clear that a spectral width of the LED light source is greater than a spectral width of the LD light source. In other words, a wavelength range of the LED light source partially overlaps a wavelength range of the LD light source. In this case, with reference to FIG. 11 and FIG. 12, a first wavelength reflection unit 21 not only reflects a first light beam, but also reflects light that is in a second light beam and that has a same wavelength as that in the first light beam, and transmits light that is in the second light beam and that has a different wavelength from that in the first light beam. For example, (C) in FIG. 12 indicates that a wavelength of light in the second light beam reflected by the first wavelength reflection unit is basically the same as a wavelength of the first light beam shown in (A). For example, (D) in FIG. 12 indicates that a wavelength of light in the first light beam reflected by the first wavelength reflection unit is basically the same as the wavelength of the first light beam shown in (A). For example, (E) in FIG. 12 indicates that a wavelength of light in the second light beam transmitted through the first wavelength reflection unit is different from the wavelength of the first light beam shown in (A).

In FIG. 12, the first wavelength reflection unit has a beam splitting function. Based on a wavelength, the second light beam is split into a (C) spectrum having a same wavelength as that in the first light beam, and an (E) spectrum having a different wavelength from that in the first light beam. Further, it can be learned from a spectrum diagram that a combination of the (C) spectrum and the (E) spectrum is a (B) spectrum. (B) in FIG. 12 shows wavelengths of three colors of light: red light, green light, and blue light, that is, a wavelength range of P2. (E) in FIG. 12 is a wavelength range of P21 after P22 is reflected. (B) in FIG. 12 is compared with (E) in FIG. 12. It can be learned that the first wavelength reflection unit reflects a small part of wavelengths of the blue light, the red light, and the green light. For a spectrum of green light, (E) in FIG. 12 has one more gap than (B) in FIG. 12. A spectrum of the gap corresponds to the green light reflected by the first wavelength reflection unit. Therefore, the blue light, the red light, and the green light (that is, the light beam P22) reflected by the first wavelength reflection unit basically do not affect imaging quality of the second image source.

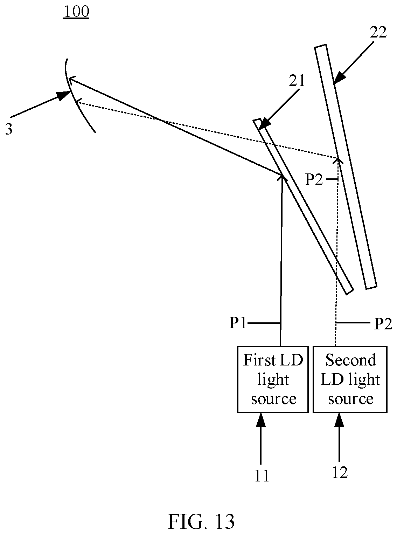

FIG. 13 is a diagram of a structure of another projection apparatus 100 that can implement dual-screen display according to this application. A first image source 11 uses an LD light source, and a second image source 12 also uses an LD light source.

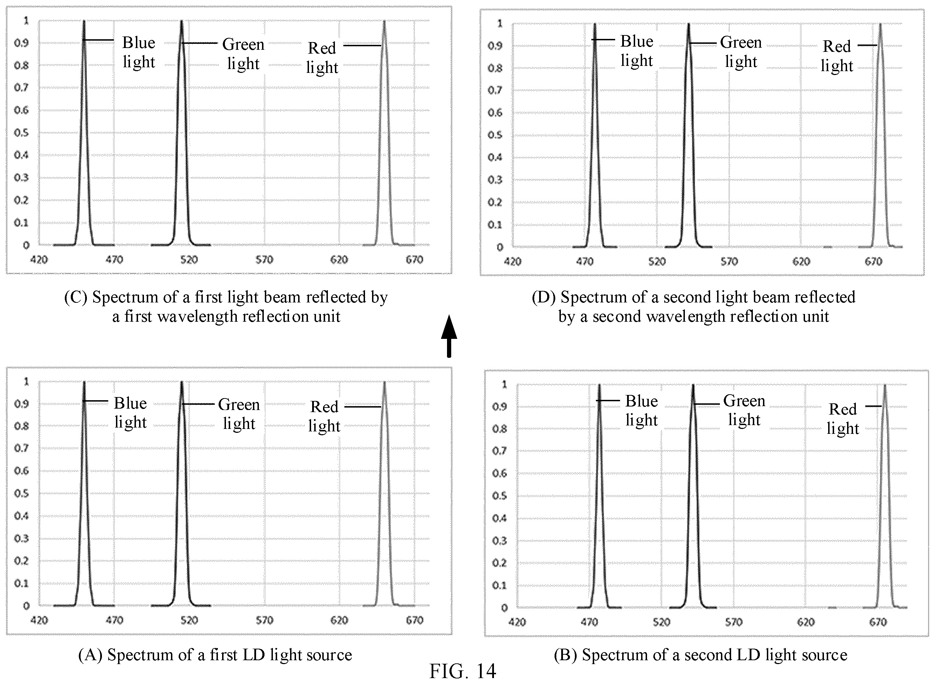

FIG. 14 shows spectra of the two LD light sources. It is clear that there is no intersection between a wavelength range of a first LD light source and a wavelength range of a second LD light source. In other words, a wavelength of the first LD light source does not overlap a wavelength of the second LD light source. In this way, with reference to FIG. 13 and FIG. 14, a first wavelength reflection unit 21 may reflect a first light beam and transmit a second light beam simultaneously. Because there is no intersection between the second light beam and the first light beam, the first wavelength reflection unit 21 does not need to reflect a part of light beams in the second light beam.

For example, (C) in FIG. 14 indicates that a wavelength of light in the first light beam reflected by the first wavelength reflection unit 21 is basically the same as a wavelength of the first light beam shown in (A) in FIG. 14. For example, (D) in FIG. 14 indicates that a wavelength of light in the second light beam reflected by the second wavelength reflection unit 22 is basically the same as a wavelength of the second light beam shown in (B) in FIG. 14.

In other words, because there is no intersection between the wavelength range of the first LD light source and the wavelength range of the second LD light source, the second light beam of the second LD light source may be transmitted through the first wavelength reflection unit 21 and reflected by the second wavelength reflection unit 22. The first wavelength reflection unit 21 directly reflects the first light beam of the first LD light source.

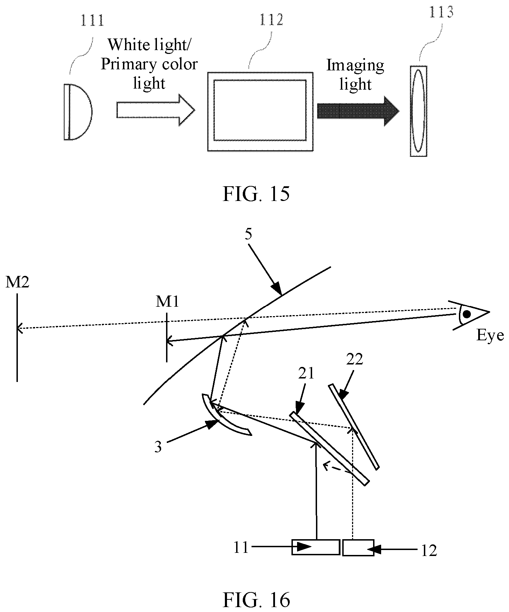

The following provides a diagram of a structure of an image source in a projection apparatus according to an embodiment of this application. As shown in FIG. 15, the image source includes a light source 111, an imaging module 112, and a projection lens 113. The image source may be used in the foregoing projection apparatus, or may be used independently.

The light source 111 in this embodiment outputs light (white light) to the imaging module 112. The imaging module 112 may modulate input light based on input image content, to generate imaging light that carries the image content. The projection lens 113 is configured to project the imaging light outwards. The projection lens 113 may be a short-focus lens or a long-focus lens.

The imaging module 112 in this embodiment may be an LCOS component, an OLED component, an LCD component, a DMD component, or an MEMS component. The light source 111 in this embodiment may be an LED light source, or may be an LD light source.

An embodiment of this application further provides a transportation means. The transportation means includes a windshield and any one of the foregoing projection apparatuses 100. The windshield is configured to reflect a first light beam and a second light beam that are reflected by a system reflection unit of the projection apparatus 100, to form a first image corresponding to the first light beam and a second image corresponding to the second light beam. Both the first image and the second image are virtual images. The first image and the second image are located on one side of the windshield, and a driver is located on the other side of the windshield.

For example, FIG. 16 is a diagram of a structure of the projection apparatus 100 in FIG. 5 that is used in a head-up display HUD according to an embodiment of this application. In FIG. 16, the projection apparatus 100 forms a first virtual image M1 and a second virtual image M2 on one side of the windshield 5.

For example, the transportation means may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

For example, both the first virtual image M1 and the second virtual image M2 are augmented reality display images. The augmented reality display image is used to display information such as map auxiliary information and external object indication information. The external object indication information includes but is not limited to a safe inter-vehicle distance, a surrounding obstacle, a vehicle reversing image, and the like. The map auxiliary information is used for assisted driving. For example, the map auxiliary information includes but is not limited to a direction arrow, a distance, a travel time, and the like.

Alternatively, both the first virtual image M1 and the second virtual image M2 are status display images. The status display image is used to display status information, entertainment information, and the like of the transportation means. A vehicle is used as an example. The status information of the transportation means is generally information displayed on a dashboard of the transportation means, and is also referred to as dashboard information, including but not limited to information such as a driving speed, a driving mileage, a fuel amount, a water temperature, and a vehicle light status.

Alternatively, the first virtual image M1 and the second virtual image M2 include an augmented reality display image and a status display image. For example, the first virtual image M1 is an augmented reality display image, and the second virtual image M2 is a status display image.

In embodiments of this application, the projection apparatus uses a plurality of wavelength reflection units, and a spatial blockage may exist between the plurality of wavelength reflection units, so that a structure of the projection apparatus is compact, and a volume of the projection apparatus is small.

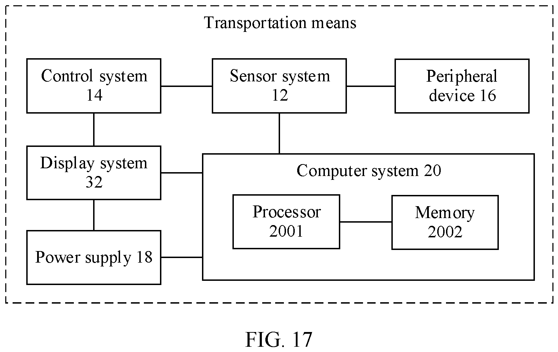

FIG. 17 is a diagram of a possible functional framework of a transportation means according to an embodiment of this application.

As shown in FIG. 17, the functional framework of the transportation means may include various subsystems, for example, a control system 14, a sensor system 12, one or more peripheral devices 16 (one peripheral device 16 is used as an example in the figure), a power supply 18, a computer system 20, and a display system 32 shown in the figure. Optionally, the transportation means may further include another functional system, for example, an engine system that provides power to the transportation means. This is not limited herein in this application.

The sensor system 12 may include a plurality of detection apparatuses. The detection apparatuses can sense measured information, and convert the sensed information into an electrical signal or other information in a required form based on a specific rule for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like. This is not limited in this application.

The control system 14 may include several elements, for example, a steering unit, a brake unit, a lighting system, a self-driving system, a map navigation system, a network time system, and an obstacle avoidance system shown in the figure. Optionally, the control system 14 may further include elements such as a throttle controller and an engine controller that are configured to control the driving speed of the vehicle. This is not limited in this application.

The peripheral device 16 may include several elements, for example, a communication system, a touchscreen, a user interface, a microphone, and a speaker shown in the figure. The communication system is configured to implement network communication between the transportation means and another device other than the transportation means. In actual application, the communication system may implement network communication between the transportation means and the another device by using a wireless communication technology or a wired communication technology. The wired communication technology may refer to performing communication between the vehicle and the another device by using a network cable, an optical fiber, or the like.

The power supply 18 represents a system used to provide power or energy for the vehicle, and may include but is not limited to a rechargeable lithium battery and a lead-acid battery. In actual application, one or more battery modules in the power supply are configured to provide electrical energy or energy for starting the vehicle. A type and a material of the power supply are not limited in this application.

Several functions of the transportation means are all controlled and implemented by the computer system 20. The computer system 20 may include one or more processors 2001 (one processor is shown as an example in the figure) and a memory 2002 (which may also be referred to as a storage apparatus). During actual application, the memory 2002 is also disposed inside the computer system 20, or may be disposed outside the computer system 20, for example, used as a cache in the transportation means. This is not limited in this application. Specifically, the processor 2001 may include one or more general-purpose processors, for example, a graphics processing unit (graphics processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), or a solid-state drive (solid-state drive, SSD). The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. The function includes but is not limited to some or all functions in the diagram of the functional framework of the vehicle shown in FIG. 13. In this application, the memory 2002 may store a set of program code used to control the vehicle. The processor 2001 may control safe driving of the vehicle by invoking the program code. A manner of implementing safe driving of the vehicle is specifically described in detail below in this application.

Optionally, in addition to storing the program code or instructions, the memory 2002 may further store information such as a road map, a driving route, and sensor data. The computer system 20 may implement a vehicle-related function in combination with other elements in the diagram of the functional framework of the vehicle, such as the sensor and the GPS in the sensor system. For example, the computer system 20 may control a driving direction, a driving speed, or the like of the transportation means based on data input of the sensor system 12. This is not limited in this application.

The display system 32 may include several elements, for example, a windshield, a controller, and the projection apparatus described above. The controller is configured to generate an image based on a user instruction (for example, generate an image including a vehicle status such as a vehicle speed and a power/fuel amount and an image of augmented reality AR content), and send the image content to the projection apparatus. The projection apparatus projects, to the windshield, light carrying the image content, where the windshield is configured to reflect the light carrying the image content, so that a virtual image corresponding to the image content is displayed in front of a driver. It should be noted that functions of some elements in the display system 32 may alternatively be implemented by another subsystem of the vehicle. For example, the controller may alternatively be an element in the control system 14.

FIG. 17 in this application shows that four subsystems are included. The sensor system 12, the control system 14, the computer system 20, and the display system 32 are merely examples, and do not constitute a limitation. During actual application, the transportation means may combine several elements in the vehicle based on different functions, to obtain subsystems with corresponding different functions. During actual application, the transportation means may include more or fewer systems or elements. This is not limited in this application.

In the descriptions of this specification, the described specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A projection apparatus, comprising:
a first image source, configured to generate a first light beam that carries first image content;
a second image source, configured to generate a second light beam that carries second image content, wherein a spectrum of the first light beam is different from a spectrum of the second light beam;
a first wavelength reflection unit located on a propagation path of the first light beam and a propagation path of the second light beam, and a second wavelength reflection unit located on the propagation path of the second light beam; and
a system reflection unit, wherein
the first wavelength reflection unit is configured to: reflect the first light beam to the system reflection unit, and transmit, to the second wavelength reflection unit, light that is in the second light beam and that has a different wavelength from that in the first light beam;
the second wavelength reflection unit is configured to reflect, to the system reflection unit, the light that is in the second light beam and that has the different wavelength from that in the first light beam; and
the system reflection unit is configured to: reflect the received first light beam, and reflect the light that is in the second light beam and that has the different wavelength from that in the first light beam.

2. The projection apparatus according to claim 1, wherein the second wavelength reflection unit and the first wavelength reflection unit are stacked along the propagation path of the second light beam; and
reflected light of the second wavelength reflection unit is transmitted through the first wavelength reflection unit, and then is incident on the system reflection unit.

3. The projection apparatus according to claim 1 or 2, wherein a first reflection film layer is formed on a reflection surface of the first wavelength reflection unit, and the first reflection film layer is configured to: totally reflect the first light beam, and transmit the light that is in the second light beam and that has the different wavelength from that in the first light beam.

4. The projection apparatus according to any one of claims 1 to 3, wherein a second reflection film layer is formed on a reflection surface of the second wavelength reflection unit, and the second reflection film layer is configured to totally reflect the light that is in the second light beam and that has the different wavelength from that in the first light beam.

5. The projection apparatus according to claim 1 or 2, wherein the first wavelength reflection unit has a first surface and a second surface that are opposite to each other;
the first surface is configured to: reflect the first light beam to the system reflection unit, and transmit, to the second wavelength reflection unit, the light that is in the second light beam and that has the different wavelength from that in the first light beam; and
a partial area of the second surface is configured to reflect the reflected light of the second wavelength reflection unit.

6. The projection apparatus according to claim 1 or 2, wherein there is no intersection between a wavelength range of the first light beam and a wavelength range of the second light beam.

7. The projection apparatus according to claim 6, wherein the first wavelength reflection unit comprises a beam splitter, a first reflection film layer is formed on a reflection surface of the beam splitter, and the first reflection film layer is configured to: totally reflect the first light beam, and transmit the second light beam.

8. The projection apparatus according to claim 7, wherein the second wavelength reflection unit comprises a reflective mirror, the reflective mirror and the beam splitter are stacked along the propagation path of the second light beam, a second reflection film layer is formed on a reflection surface of the reflective mirror, and the second reflection film layer is configured to totally reflect the second light beam.

9. The projection apparatus according to any one of claims 1 to 8, wherein the first image source comprises an LD light source or an LED light source, and the second image source comprises an LD light source or an LED light source.

10. The projection apparatus according to claim 1, wherein a wavelength range of the second light beam partially overlaps a wavelength range of the first light beam.

11. The projection apparatus according to claim 10, wherein the first wavelength reflection unit comprises a beam splitter, a third reflection film layer is formed on a reflection surface of the beam splitter, the third reflection film layer is configured to: totally reflect the first light beam, and totally reflect light that is in the second light beam and that has a same wavelength as that in the first light beam, and the third reflection film layer is further configured to transmit the light that is in the second light beam and that has the different wavelength from that in the first light beam.

12. The projection apparatus according to claim 11, wherein the second wavelength reflection unit comprises a reflective mirror, the reflective mirror and the beam splitter are stacked along the propagation path of the second light beam, a fourth reflection film layer is formed on a reflection surface of the reflective mirror, and the fourth reflection film layer is configured to totally reflect the light that is in the second light beam and that has the different wavelength from that in the first light beam.

13. The projection apparatus according to any one of claims 1 to 12, wherein the projection apparatus further comprises a diffuser located on a light emergence side of the first image source and a light emergence side of the second image source, and the diffuser is configured to: diffuse the first light beam to the first wavelength reflection unit, and diffuse the second light beam to the first wavelength reflection unit and the second wavelength reflection unit.

14. The projection apparatus according to any one of claims 1 to 13, wherein the projection apparatus further comprises a polarization converter located on the light emergence side of the first image source or the light emergence side of the second image source, and the polarization converter is configured to change a polarization direction of the first light beam or a polarization direction of the second light beam.

15. A transportation means, comprising:
a windshield and the projection apparatus according to any one of claims 1 to 14, wherein
the projection apparatus is configured to output a light beam to the windshield, to form images corresponding to different image content.
